# EUROPEAN PATENT SPECIFICATION

(11) **EP 0 682 796 B1**
(45) Date of publication and mention of the grant of the patent: **26.08.1998**
(21) Application number: 94905304.5
(22) Date of filing: 26.01.1994
(51) Int. Cl.: G07F 7/06

(54) **A METHOD AND PLANT FOR HANDLING CANS**
VERFAHREN UND ANLAGE ZUM VERARBEITEN VON DOSEN
PROCEDE ET INSTALLATION DE MANIPULATION DE BOITES METALLIQUES

(30) Priority: 26.01.1993 SE 9300224
(43) Date of publication of application: 22.11.1995
(73) Proprietor: NIMO-VERKEN AB, 548 22 Hova (SE)
(72) Inventor: WÖHLK, Knud, S-138 00 Älta (SE)
(74) Representative: Henningsson, Gunnar
(86) International application number: SE9400055
(87) International publication number: WO9417497

(56) References cited:
- US-A- 4 179 018
- US-A- 4 989 507

## Description

### Technical Field

The present invention relates to a method and an apparatus for handling recyclable beverage cans, comprising the use of a can feed device, a can crusher and a collector for compacted cans.

### Technical Background

Most shops today have special machines for receiving recyclable beverage cans of aluminium. In these machines, the cans, once approved through different detection techniques, are compacted or crushed before dropping into a collecting bag or box which, when filled, is taken care of by the shop staff and removed from inside the shop (see US-A-4 989 507). Since the collected cans often contain liquid residues and other impurities, sanitary problems often arise. The very handling of the collecting bags or boxes also involves problems.

### Object of the Invention

The object of the present invention is to provide a method and an apparatus for handling recyclable cans, which essentially obviates the above-mentioned problems.

### Summary of the Invention

This object is achieved by a method and an apparatus having the features recited in the appended claims.

The invention is thus based on the insight that major advantages can be gained by separating the feed device located in the shop or the like and containing the required can-detecting means for distinguishing between approved and non-approved cans, from the crusher and the collector, which latter devices can thus be separately disposed outside the interference-prone area where the feed device is located, for example outside the shop at the goods reception bay or general refuse collecting area. For conveying the cans between the feed device and the crusher, use is made of a can conveyor which preferably operates pneumatically, suitably being of the pneumatic tube type.

As will be readily appreciated, the invention ensures that odour problems and other sanitary problems inside the shop are largely eliminated at the same time as the handling of the compacted and collected cans is rendered considerably more effective. For example, the cans can be collected directly in a large transport vessel, such as a container, or in a large storage vessel which can easily be emptied into a transport vehicle for recycling.

The invention will be described in more detail hereinbelow in one embodiment with reference to the accompanying drawing.

### Brief Description of the Drawing

Fig. 1 is a schematic partial view from above of a conceivable feed device for use in an apparatus according to the invention.

Fig. 2 is a schematic side view, partly in section, of a part of an embodiment of a conveyor for use in an apparatus according to the present invention.

Fig. 3 is a schematic perspective view of a part of an apparatus according to the invention, illustrating a preferred embodiment of a combined crusher and collector.

Fig. 4 is a view similar to Fig. 1, illustrating an alternative embodiment of a feed device.

Fig. 5 is a view similar to Fig. 2, illustrating a function for preventing a non-approved can from being fed into the conveyor.

### Description of Embodiments

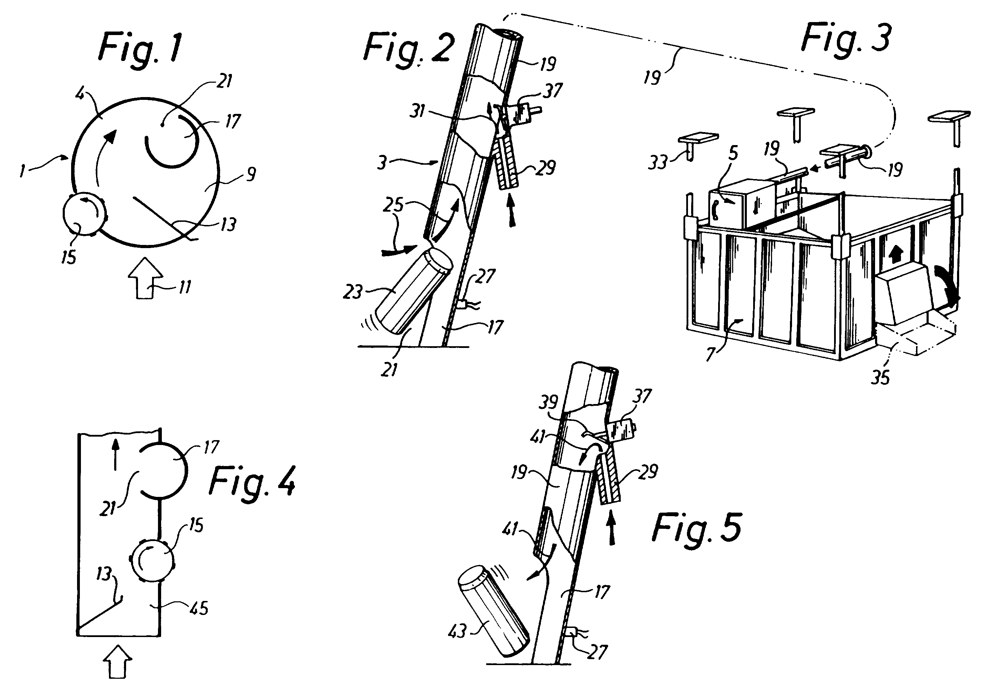

The embodiment of an apparatus according to the invention as illustrated in Figs 1-3 comprises as main components a feed device 1, illustrated highly schematically, a pipe conveyor 3, a crusher 5 and a collector 7.

The feed device 1 includes a horizontal rotary disc 9, on one side of which cans are to be inserted standing, as indicated by the arrow 11. A guide baffle 13 forces a deposited can to move against a rotating magnetic cylinder 15 having a vertical axis, which detects and removes cans of magnetic material, i.e. non-approved cans. The approved cans are however displaced on the disc 4 up to the inlet portion 17 of a pipe 19 being part of the can conveyor 3.

The inlet portion 17 of the pipe connects with the disc 4 and is open at the bottom towards the direction whence the cans are displaced towards the inlet portion 17. The opening 21 of the inlet portion 17 has a width and a height adapted to the size of the cans to be sucked into the pipe 19. The inlet portion is inclined slightly rearwards from vertical position relative to the opening 21.

A can 23 moved up to the opening 21 will remain standing for a short while before being sucked into and up the pipe 19 together with air 25 sucked in. A can standing before the opening 21 is detected by a detector 27, whose function will be described in more detail hereinbelow.

The air flow in the pipe 19 is produced by an air injector 29, blowing air 31 into the pipe 19 obliquely from below. This injection of air brings about the air suction in the inlet portion 17 of the pipe and produces a blower conveying effect further on in the pipe 19 on cans sucked into it, when these have passed the injector 29. This ensures efficient conveyance of the cans through the pipe 19 up to the crusher 5.

The crusher, which may be of any suitable type, is disposed directly on a large collector 7, which is suspended by means of stays 33 (not shown in greater detail), so that a can recycling vehicle can easily be backed in underneath the container 7 for emptying collected cans down into the loading compartment of the vehicle via a chute 35 which can be folded down from the container 7.

At the air outlet end of the injector 29 in the pipe, there is provided a flap device 37, by means of which a guide flap 39 can be folded out in front of the air flow from the injector 29. In this manner, the air flow will be reversed in the inlet portion 17, as shown by the arrows 41. The reversed air flow ejects any can 43 that may be positioned in front of the opening 21.

The flap device 37 is controlled by the detector 27. If a can 43 remains too long before the opening 21 without being sucked into the pipe, this means that the can is too heavy and cannot be approved. The air-reversing function now described will thus ensure that such a can 43 is ejected and not conveyed further for compacting and collection.

Fig. 4 illustrates an alternative embodiment of a feed device for use in an apparatus according to the invention. Cans are moved past the inlet opening 21 of the pipe by means of a horizontal endless conveyor belt 45. It is understood that, in this case, cans that are too heavy can be automatically separated, in that there will not be sufficient time for such cans to be sucked in laterally into the opening 21 when passing by. In other words, the adjustment of the suction effect will determine what weight the cans should have to be sucked into the pipe.

## Claims

1. A method for handling recyclable beverage cans, the cans (23) being deposited in a feed device (1), thereafter compacted in a crusher (5) and, in the compacted state, collected in a collector (7), **characterised** by arranging the feed device (1) at a first location, in a shop, individually and separately arranging the crusher (5) adjacent the collector (7) at a second location outside the interference-prone area where the feed device (1) is located, such as outside the shop at a goods reception bay, a refuse collection space or the like, and transferring deposited cans from the feed device (1) to the crusher (5) via a can conveyor (3), thereby substantially eliminating odour and other sanitary problems in the shop and rendering the handling of the compacted and collected cans significantly more effective.

2. A method as claimed in claim 1, **characterised** by using a can conveyor (3) of pneumatic type, preferably pneumatic tube type.

3. A method as claimed in claim 2, **characterised** by using a can conveyor (3) in which the cans (23) are first sucked into a pipe (19) and thereafter blown through the pipe on to the crusher (5).

4. A method as claimed in claim 3, **characterised** by detecting whether a can which is in position to be sucked into the pipe (19), is sucked into it within a predetermined time, affecting, if such suction does not take place, the air flow in the inlet portion (17) of the pipe, preferably for reversing the direction of the air flow, so that the can (43) concerned is removed from the suction position, preferably blown away therefrom.

5. A method as claimed in any one of the preceding claims, **characterised** by arranging the collector (7) such that it can be emptied downwards into a transport vehicle positioned underneath it, or using as collector a transport container, a large-size vessel or the like.

6. An apparatus for handling recyclable beverage cans, comprising a feed device (1) in which cans are deposited for evaluation, a crusher (5) to which approved cans (23) are fed for compacting, and a collector (7) for collecting cans compacted in the crusher, **characterised** in that the crusher (5) and the collector (7) are separately disposed remote from the feed device (1) which is disposed in a shop, and outside the interference-prone area where the feed device is located, especially outside the shop, the feed device (1) and the crusher (5) being connected to each other by a can conveyor (3), by means of which approved cans (23) deposited in the feed device are conveyed to the crusher (5) for compacting and subsequent collection in the collector (7).

7. An apparatus as claimed in claim 6, **characterised** in the the conveyor (3) is a pneumatic conveyor, preferably of pneumatic tube type.

8. An apparatus as claimed in claim 7, **characterised** in that the conveyor (3) is a pipe conveyor and comprises an air injector (29) producing a suction air flow in the inlet portion (17) of the pipe and an exhaust air flow in the outlet portion of the pipe.

9. An apparatus as claimed in claim 8, **characterised** in that it comprises means (37, 39) for controlling the air injector (29) such that the air flow in the inlet portion (17) of the pipe is altered, preferably reversed, with a view to removing a can (43) which is in suction position and has been detected as a non-approved can.

10. An apparatus as claimed in any one of claims 6-9, **characterised** in that the collector (7) is a container to be emptied downwards into a transport vehicle or a transport vessel, such as a container.

## Patentansprüche

1. Verfahren zum Bearbeiten recyclebarer Getränkedosen, wobei die Dosen (23) in eine Zuführvorrichtung (1) eingebracht und im folgenden in einer Quetschvorrichtung (5) verdichtet werden und im verdichteten Zustand in einer Sammelvorrichtung (7) gesammelt werden, dadurch **gekennzeichnet,** daß die Zuführvorrichtung (1) an einer ersten Stelle, in einem Geschäft, angeordnet ist und die Quetschvorrichtung (5) nahe der Sammelvorrichtung (7) individuell und getrennt davon an einer zweiten Stelle außerhalb des störungsträchtigen Raums, in dem die Zuführvorrichtung (1) angeordnet ist, angeordnet ist, z.B. außerhalb des Geschäfts im Wareneingangsbereich, einer Abfallsammelstelle oder ähnlichem, und daß die abgelagerten Dosen von der Zuführvorrichtung (1) über eine Dosenfördervorrichtung (3) der Quetschvorrichtung (5) zugeführt werden, wobei Geruchs- und andere Hygieneprobleme im Geschäft weitgehend ausgeschlossen werden und die Verarbeitung der verdichteten und gesammelten Dosen bedeutend effektiver wird.

2. Verfahren nach Anspruch 1, dadurch **gekennzeichnet,** daß eine Dosenfördervorrichtung (3) des pneumatischen Typs, vorzugsweise des pneumatischen rohrförmigen Typs verwendet wird.

3. Verfahren nach Anspruch 2, dadurch **gekennzeichnet,** daß eine Dosenfördervorrichtung (3) verwendet wird, in der die Dosen (23) zuerst in ein Rohr (19) eingesaugt werden und dann durch das Rohr in die Quetschvorrichtung (5) geblasen werden.

4. Verfahren nach Anspruch 3, dadurch **gekennzeichnet,** daß ermittelt wird, ob eine Dose, die sich in einer Position zum Einsaugen in das Rohr (19) befindet, innerhalb einer vorgegebenen Zeit eingesaugt wird, wobei der Luftstrom im Einlaßteil (17) des Rohrs beeinträchtigt wird, wenn das Einsaugen nicht stattfindet, vorzugsweise die Richtung des Luftstroms umgekehrt wird, so daß die betreffende Dose (43) aus der Position zum Einsaugen entfernt, vorzugsweise weggeblasen wird.

5. Verfahren nach einem der vorhergehenden Ansprüche, dadurch **gekennzeichnet,** daß die Sammelvorrichtung (7) so angeordnet wird, daß sie nach unten in ein Transportfahrzeug entleert werden kann, welches darunter gestellt wird, oder daß ein Transportcontainer, ein Großraumfahrzeug oder ähnliches als Sammelvorrichtung eingesetzt wird.

6. Vorrichtung zum Bearbeiten von recyclebaren Getränkedosen mit einer Zuführvorrichtung (1), in welcher Dosen zur Wertbestimmung deponiert werden, einer Quetschvorrichtung (5), welcher gebilligte Dosen (23) zum Verdichten zugeführt werden, und einer Sammelvorrichtung (7) zum Sammeln der in der Quetschvorrichtung verdichteten Dosen, dadurch **gekennzeichnet,** daß die Quetschvorrichtung (5) und die Sammelvorrichtung (7) getrennt und enffernt von der Zuführvorrichtung (1), welche in einem Geschäft aufgestellt ist, aufgestellt werden, außerhalb des störungsträchtigen Raumes, in dem die Zuführvorrichtung aufgestellt ist, insbesondere außerhalb des Geschäfts, wobei die Zuführvorrichtung (1) und die Quetschvorrichtung (5) miteinander durch eine Dosenfördervorrichtung (3) verbunden sind, mittels welcher die in der Zuführvorrichtung deponierten gebilligten Dosen (23) zur Quetschvorrichtung (5) zum Verdichten und zum darauffolgenden Sammeln in der Sammelvorrichtung (7) befördert werden.

7. Vorrichtung nach Anspruch 6, dadurch **gekennzeichnet,** daß die Fördervorrichtung (3) eine pneumatische Fördervorrichtung ist, vorzugsweise vom pneumatischen rohrförmigen Typ.

8. Vorrichtung nach Anspruch 7, dadurch **gekennzeichnet,** daß die Fördervorrichtung (3) eine Rohrfördervorrichtung ist und eine Lufteinblasdüse (29) enthält, welche einen Saugluftstrom im Einlaßteil (17) des Rohrs und einen Abluftstrom im Auslaßteil des Rohrs erzeugt.

9. Vorrichtung nach Anspruch 8, dadurch **gekennzeichnet,** daß sie Vorrichtungen (37, 39) zum Steuern der Lufteinblasdüse derart enthält, daß der Luftstrom im Einlaßteil (17) des Rohrs verändert, vorzugsweise umgekehrt wird, wenn eine Dose (43) entfernt werden soll, welche sich in der Einsaugposition befindet und als nichtgebilligte Dose entdeckt wurde.

10. Vorrichtung nach einem der Ansprüche 6 bis 9, dadurch **gekennzeichnet,** daß die Sammelvorrichtung (7) ein Behälter ist, welcher nach unten in ein Transportfahrzeug oder einen Transportbehälter, wie z.B. einen Container, entleert wird.

## Revendications

1. Procédé pour traiter des boîtes de boisson recyclables, les boîtes (23) étant déposées dans un dispositif de chargement (1), puis compactées dans un broyeur (5) et recueillies, à l'état compacté, dans un collecteur (7), caractérisé par la mise en place du dispositif de chargement (1) en un premier emplacement, dans un magasin, la mise en place individuelle et séparée du broyeur (5) au voisinage immédiat du collecteur (7) en un second emplacement situé à l'extérieur de la zone où il est susceptible de créer une gène, dans laquelle le dispositif de chargement (1) est situé, comme à l'extérieur du magasin au niveau d'un quai de réception de marchandises, d'un espace de rassemblement de déchets ou analogue, et le transfert des boîtes déposées du dispositif de chargement (1) au broyeur (5) par l'intermédiaire d'un transporteur de boîtes (3), ce qui permet d'éliminer pour l'essentiel les odeurs et autres problèmes sanitaires dans le magasin et de rendre nettement plus efficace le traitement des boîtes compactées et collectées.

2. Procédé selon la revendication 1, caractérisé par l'utilisation d'un transporteur de boîtes (3), de type pneumatique, de préférence du type à tube pneumatique.

3. Procédé selon la revendication 2, caractérisé par l'utilisation d'un transporteur de boîtes (3), dans lequel les boîtes (23) sont tout d'abord aspirées dans un tube (19) et sont ensuite poussées par soufflage, à travers ce tube, jusque sur le broyeur (5).

4. Procédé selon la revendication 3, caractérisé par la détection du fait qu'une boîte, qui est dans une position dans laquelle elle est apte à être aspirée dans le tube (19), est aspirée dans ce dernier dans un délai prédéterminé, et la modification du courant d'air dans le tronçon d'entrée (17) du tube, si une telle aspiration ne se produit pas, de préférence pour inverser le sens du courant d'air, pour que la boîte (43) concernée soit retirée de la position d'aspiration, et de préférence en soit chassée par soufflage.

5. Procédé selon l'une quelconque des revendications précédentes, caractérisé par la mise en place du collecteur (7) de telle sorte qu'il puisse être vidé vers le bas dans un véhicule de transport placé en dessous de lui, ou par l'utilisation, en tant que collecteur, d'un conteneur de transport, d'un récipient de grandes dimensions ou analogues.

6. Appareil pour traiter des boîtes de boisson recyclables, comprenant un dispositif de chargement (1), dans lequel des boîtes sont déposées pour leur évaluation, un broyeur (5), auquel des boîtes acceptées (23) sont envoyées pour leur compactage, et un collecteur (7) pour recueillir les boîtes compactées dans le broyeur, caractérisé en ce que le broyeur (5) et le collecteur (7) sont disposés séparément à distance du dispositif de chargement (1), qui est disposé dans un magasin, et à l'extérieur de la zone où ils sont susceptibles de créer une gêne, dans laquelle le dispositif de chargement est situé, en particulier à l'extérieur du magasin, le dispositif de chargement (1) et le broyeur (5) étant raccordés l'un à l'autre par un transporteur de boîtes (3), à l'aide duquel des boîtes acceptées (23), déposées dans le dispositif de chargement, sont transportées jusqu'au broyeur (5) pour être compactées et recueillies ensuite dans le collecteur (7).

7. Appareil selon la revendication 6, caractérisé en ce que le transporteur (3) est un transporteur pneumatique, de préférence du type à tube pneumatique.

8. Appareil selon la revendication 7, caractérisé en ce que le transporteur (3) est un transporteur à tube et comprend un injecteur d'air (29) produisant un courant d'air d'aspiration dans le tronçon d'entrée (17) du tube, et un courant d'air d'évacuation dans le tronçon de sortie du tube.

9. Appareil selon la revendication 8, caractérisé en ce qu'il comprend des moyens (37,39) pour commander l'injecteur d'air (29) de telle sorte que le courant d'air dans le tronçon d'entrée (17) du tube soit modifié, de préférence inversé, en vue de retirer une boîte (43) qui est en position d'aspiration et a été détectée comme étant une boîte non acceptée.

10. Appareil selon l'une quelconque des revendications 6 à 9, caractérisé en ce que le collecteur (7) est un récipient devant être vidé vers le bas dans un véhicule de transport ou un récipient de transport, tel qu'un conteneur.
